Europäisches Patentamt

(19) **European Patent Office**

**Office européen des brevets**

(11) Publication number: **0 033 180**
**B1**

(12) **EUROPEAN PATENT SPECIFICATION**

(45) Date of publication of patent specification: **01.08.84**

(51) Int. Cl.³: **A 23 N 15/08**

(21) Application number: **81200089.1**

(22) Date of filing: **23.01.81**

(54) An industrial peeler for onions or the like bulbous and tuberous vegetations.

(30) Priority: **25.01.80 NL 8000484**

(43) Date of publication of application:
**05.08.81 Bulletin 81/31**

(45) Publication of the grant of the patent:
**01.08.84 Bulletin 84/31**

(84) Designated Contracting States:
**AT BE CH DE FR GB IT LI LU NL SE**

(56) References cited:
**FR - A - 2 200 775**
**FR - A - 2 288 483**
**NL - A - 7 607 502**
**NL - A - 7 901 641**

(73) Proprietor: **North Investment Finance Company**
**Limited**
**Wellington House 17 Union Street**
**Jersey (Channel Islands) (GB)**

(72) Inventor: **Raatz, Gábor Janos**
**Generaal Foulkesweg 89**
**NL-6700 AH Wageningen (NL)**

(74) Representative: **Kooy, Leendert Willem et al,**
**OCTROOIBUREAU VRIESENDORP & GAADE P.O.**
**Box 266**
**NL-2501 AW The Hague (NL)**

Courier Press, Leamington Spa, England.

## Description

An industrial peeler for onions or the like bulbous and tuberous vegetables, substantially comprising an orienting unit in which the onions are supported by relatively adjacent orienting means on both sides of their path, which adjacent orienting means has upper parts which are relatively driven in such a way that the onions will start to spin around a vertical axis which extends between the tail and root of the onion, a combined mechanism comprising a cutting mechanism to cut off the tails and roots of the onions, and a notch mechanism to make indentations in the outer scales of the onions, said combined mechanism being provided on both sides of the onion's path with support means comprising at least, on one side, one driven endless conveyor belt contacting the onions at their largest diameter perpendicular to the spinning axis, whereby in the region where the onions are engaged by the support means of the combined mechanism the upper parts of the orienting means of the orienting unit extend downwardly in the direction of forward movement of the onions to not interfere with the cutting mechanism, and a blow mechanism to remove the outer scales of the onions.

Such a peeler is known from the, not prepublished, Dutch patent application 79 01641.

It appeared that the transfer of onions from the orienting unit to the combined cutting and notch mechanism does not take place in the correct way. This can be caused among others by the fact that the path in which the onions move forward is not rectilinear, as it is impossible to have both resilient means of the combined mechanism evade up to the same extent when an onion is supplied, which necessitates the two guides to form a larger mutual distance. This may lead to an accumulation of onions in the transfer region so that the correct operation of the machine is disturbed.

The invention intends to improve the above mentioned operation. According to the invention this is achieved in that in the region where the onions are first engaged by the support means, the at least one driven endless resilient means is, in this region, guided around a guide roll and that there is disposed in this region, one on each side of the onion's path, a two-armed lever, each pivotably supported, as is the or each guide roll, on respective fixed shafts on the axes of which the junctions of the two-armed levers are placed, one arm of one lever being connected by means of a slot and pin system to the corresponding arm of the other lever placed in a mirror-reflected way on the other side of the onion's path, whereas the free ends of the other arms of said two-armed levers act each one on the corresponding support means in order to adapt the distance between the support means with respect to the size of the onion to be processed.

It also appeared that the respective machine can be formed in a considerably simpler way when one of the endless resilient means of both the orienting unit and the combined mechanism is stopped. Efficient embodiments of such a machine are characterized in that the resilient means of the combined mechanism is a conveyor belt, and in that opposite to the conveyor belt is provided the notch mechanism in the form of a notch blade bar which is pivotable about a fixedly arranged support shaft when the free end, which is connected to one of the two-armed levers via a pin and slot connection, causes same to do so under the influence of the size of the onion to be processed. The cutting mechanism consists preferably of two rotating knives with a rotation center line at the side of the conveyor belt, while guides being placed in the onion's bath as extension to the rotating knives. If the direction of rotation of the rotating knives is opposite to the spinning direction of the onions which is given thereto by the conveyor belt, the respective onions are entrailed as it were. Furthermore it appeared to be required that the resilient means of the cutting and notch unit has a speed which is over 15 to 20% higher than that of the resulting speed of the orienting means of the orienting unit.

In order to guarantee that the guidance is as correct as possible, it is furthermore efficient to provide the notch blade bar with a blade extending longitudinally of the mechanism and with notch blades placed in perpendicular planes on the notch blade bar at regular distances with a substantially hollow cutting side.

The invention will be further elucidated hereinafter on the basis of the drawing in which by way of example an embodiment is shown of a machine according to the invention.

Figure 1 is a schematic plan view of the most essential components of the mechanism for cutting and notching onions and the like bulbous and tuburous plants, and

Figure 2—4 simplified cross-sections according to the line II—II, III—III and IV—IV respectively of the mechanism of Figure 1.

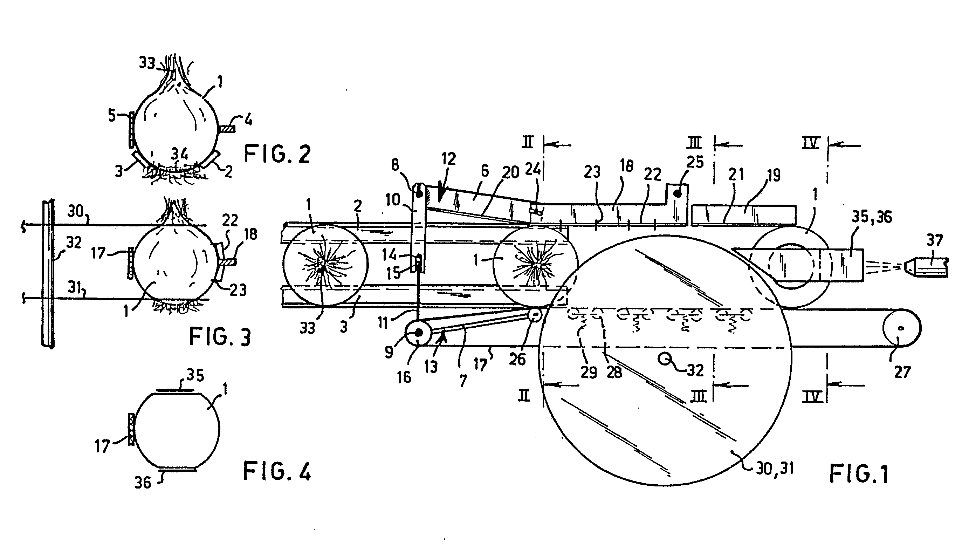

In the mechanism as illustrated in Figure 1 the onions 1 move from the left to the right through the mechanism as shown in the drawing. Initially, so at the left in Figure 1, as well as in the simplified cross-section of Figure 2, the onions are caused to spin about a vertical axis of rotation by for instance a stationary belt 2 and a moving endless belt 3. The guides 4 and 5 as illustrated in Figure 2 only serve to start this operation, and are not further discussed here, as with respect to the present problem of the correct way of feeding the onions to the cutting and notch mechanism it is assumed that the spinning forward movement of the onions is correct.

The receiving section of the above mentioned mechanism is funnel-shaped and can adapt itself to the diameters of the onions to a sufficient extent, such, that the spinning axis remains rectilinear as yet. For that purpose this receiving section is equipped with a guide of the pantograph type in which two arms 6 and 7 of the same size always rotate about the same angle about the fixed shafts 8 and 9, as said arms are fixedly connected to the bars 10 and 11, so that levers 12 and 13 are created, wherein the bar of the one lever has a slot 14 and the bar 11 of the other lever has a pin 15. Furthermore also a guide roll 16 of an endless conveyor belt 17 rotates about the shaft 9. The same could in principle be valid for the shaft 8 opposite thereto, but in this embodiment a mechanism is selected, having only one endless conveyor belt 17 which cooperates with non-rectilinearly moving, oppositely disposed means, being successively a first blade bar, coinciding with the arm 6 of the pantograph guide, a notch blade bar 18, and a subsequent fixed blade bar 19.

The first blade bar in the configuration of the arm 6 and the subsequent fixed blade bar 19 are provided with a horizontally, continuously extending blade 20, 21 respectively, and the notch blade bar 18 is not only provided with a horizontally, continuously extending blade 22, but also with notch blades 23, placed preferably perpendicular to this blade 22 at mutually regular distances, and according to Figure 3 said notch blades 23 have a configuration which is adapted somewhat to the bulb-configuration of the onions, that is to say with a substantially hollow cutting side.

The notch blade bar 18 is pivotally connected to the arm 6 by means of a shaft 24, and the end, facing away from the shaft 24, is rotatably supported by a shaft 25. A guide roll 26 is located substantially symmetrical opposite the shaft 24, and is secured to the end, facing away from the shaft 9, of the arm 7 of one of the levers 13, said guide roll 26 forming a part of the guide assembly of the conveyor belt 17, said guide assembly furthermore comprises at least one driven guide roll 27 and tensioning elements with rolls 28 and springs 29 which equally load the conveyor belt 17 in the direction of the bars 18 and 19. Preferably, the axis of shaft 25 is situated in the vertical plane parallel to the longitudinal axis of the machine and containing the axis of shaft (8).

The above described structural details of the funnel-shaped reception mechanism appear to be responsible for the fact, that the tail 33 and root 34 (Figure 2) can be reliably removed from the onions by means of the knives 30 and 31 of the cutting mechanism, which are rotatingly driven by a shaft 32 (Figure 3), so that the onions will get the appearance as shown in Figure 4. This can be caused partially by the fact that the onions and the rotating knives 30 and 31 rotate in opposite directions, i.e. the onions rotate anti-clockwise and the rotating knives rotate clockwise, in Figure 1. So as it were the onions are conveyed by the rotating knives. Furthermore a difference in speed between approximately 15 and 20% between the moving belt 3 of the orienting unit and the conveyor belt 17 appears to be efficient. As example is given a speed of approximately 70 m/sec. for the moving belt 3 and the speed of approximately 90 m/sec. for the conveyor belt 17.

Guides 35 and 36 are associated with the rotating knives 30 and 31, said guides keeping the onions in the correct position during the operation of the blow nozzle 37 of the blow mechanism. Said blow nozzle 37 produces a jet of air as soon as an onion, the scales of which are already sufficiently loosened by the notch blades, arrives rotatingly between the guides 35 and 36. Then the onion is completely peeled and, because it passes the rear end of the fixed blade bar 19, it falls down in a (not shown) tray placed in the machine frame. It is true indeed that the cut-off tails and roots and the blown-off scales also arrive therein, but the separation of these components for optionally further processing the onions does not form a large problem and is no part of the invention.

A complete, industrial peeler is preferably embodied with two processing tracks, placed on a chassis in a mirror-reflected way, and then it has a capacity of approximately 1 ton per hour.

## Claims

1. An industrial peeler for onions (1) or the like bulbous and tuberous vegetables, substantially comprising an orienting unit in which the onions are supported by relatively adjacent orienting means (2, 3) on both sides of their path, which adjacent orienting means has upper parts which are relatively driven in such a way that the onions will start to spin around a vertical axis which extends between the tail (33) and root (34) of the onion, a combined mechanism comprising a cutting mechanism (30, 31) to cut off the tails and roots of the onions and a notch mechanism (22, 23) to make indentations in the outer scales of the onions, said combined mechanism being also provided on both sides of the onion's path with support means comprising at least, on one side, one driven endless resilient means (17) contacting the onions at their largest diameter perpendicular to the spinning axis, whereby in the region where the onions are engaged by the support means (17, 6—18) of the combined mechanism the upper parts of the orienting means (2, 3) of the orienting unit extend downwardly in the direction of the forward movement of the onions to not interfere with the cutting mechanism (30, 31), and a blow mechanism (37) to remove the outer scales of the onions, characterized in that, in the region where the onions are first engaged by the support means, the at least one driven endless resilient means (17) is, in this region, guided around a guide roll (16) and that there is disposed in this region, one on each side of the onion's path, a two-armed lever (12, 13), each pivotably supported, as is the or each guide roll (16), on respective fixed shafts (8, 9) on the axes of which the junctions of the two-armed levers (12, 13) are placed, one arm (10) of one lever (12) being connected by means of a slot and pin system (14, 15) to the corresponding arm (11) of the other lever (13) placed in a mirror-reflected way on the other side of the onion's path, whereas the free ends of the other arms (6, 7) of said two-armed levers (12, 13) act each one on the corresponding support means (17, 6—18) in order to adapt the distance between the support means (17, 6—18) with respect to the size of the onion to be processed.

2. A machine according to claim 1, in which the orienting means of the orienting unit and the support means of the combined mechanism comprise one endless resilient means (2, 3, 17), characterized in that the resilient means (17) of the combined mechanism is a conveyor belt, and in that opposite to the conveyor belt (17) is provided the notch mechanism in the form of a notch blade bar (18) which is pivotable about a fixedly arranged support shaft (25) when the free end, which is connected to one of the two-armed levers (12) via a pin and slot connection (24), causes same to do so under the influence of the size of the onion to be processed.

3. A machine according to claim 1 or 2, characterized in that the cutting mechanism consists of two rotating knives (30 and 31) with a rotation center line at the side of one of the endless resilient means (17) of the combined mechanism (17), and that guides (35, 36) are placed in the onions' path as extension to the rotating knives.

4. A machine according to any of the claims 1—3, characterized in that the direction of rotation of the rotating knives (30 and 31) is opposite to the spinning direction of the onions which is given thereto by the endless resilient means (17) of the combined mechanism.

5. A machine according to claim 2 or 3, characterized in that the conveyor belt (17) has a speed which is over 15 to 20% higher than the resulting speed of the orienting means (2, 3) of the orienting unit.

6. A machine according to any of claims 2—5, characterized in that at least the notch blade bar (18) is provided with a blade (22) extending longitudinally of the mechanism and with notch blades (23) placed in perpendicular planes on the notch blade bar at regular distance with a substantially hollow cutting side.

7. A machine according to any of claims 1—6, characterized in that the endless resilient means (17) of the combined mechanism is loaded in the direction of the notch blade bar (18) by means of spring loaded rolls (28, 29).

8. A machine according to any of claims 2—7, characterized in that the axis of the support shaft (25) of the notch blade bar (18) is positioned in a vertical plane, which is parallel to the longitudinal axis of the machine and contains the axis of the shaft (8) on which one of the levers is placed.

9. A machine according to claim 8, characterized in that furthermore a fixed blade bar (19) is provided which lies in the extension of the notch blade bar (18).

**Revendications**

1. Eplucheur industriel pour les oignons (1) ou semblables, les légumes bulbeux et tuberculeux, essentiellement comportant une unité d'orientation dans laquelle les oignons s'appuient sur des organes d'orientation (2, 3) relativement contigus situés des deux côtés de leur trajet, lesdits organes d'orientation contigus ayant les parties supérieures qui sont relativement actionnées de sorte que les oignons se mettront à pivoter autour d'un axe vertical s'étendant entre la queue (33) et la racine (34) de l'oignon, un mécanisme combiné comportant un mécanisme coupant (30, 31) pour couper les gueues et les racines des oignons et un mécanisme d'entaillage (22, 23) pour faire des entailles dans les écailles extérieures des oignons, ledit mécanisme combiné étant également pourvu, des deux côtés du trajet de l'oignon, d'organes d'appui comportant d'un côté, au moins, un organe élastique sans fin propulsé (17) qui entre en contact avec les oignons à leur plus grand diamètre perpendiculairement à l'axe de giration, et dans la région où les oignons sont engrenés par les organes d'appui (17, 6—18) du mécanisme combiné les parties supérieures des organes d'orientation (2, 3) de l'unité d'orientation s'étendent vers le bas dans la direction du mouvement en avant des oignons pour ne pas déranger le mécanisme coupant (30, 31), et un mécanisme de soufflage (37) pour enlever les écailles extérieurs des oignons, caractérisé en ce que dans la région où les oignons sont engrenés d'abord par les organes d'appui ledit organe élastique sans fin propulsé (17) est mené dans cette région autour d'un rouleau de guidage (16) et il y a pourvu dans cette région, l'un de part et d'autre du trajet de l'oignon, un levier à deux bras (12, 13), s'appuyant chacun de façon pivotante, comme ledit rouleau de guidange (16), sur des arbres fixes (8, 9) respectifs, sur les axes desquels sont disposées les jonctions des leviers à deux bras (12, 13), l'un des bras (10) d'un des leviers (12) étant relié par un système d'une rainure et d'un cheville (14, 15) au bras (11) correspondant de l'autre levier (13) disposé d'une manière miroitante de l'autre côté du trajet de l'oignon, tandis que les extrémités libres des autres bras (6, 7) desdits leviers à deux bras (12, 13) s'agissant chacune d'elles sur les organes d'appui (17, 6—18) correspondants pour adapter la distance entre les organes d'appui (17, 6—18) par rapport à la grandeur de l'oignon à être traité.

2. Dispositif selon la revendication 1 dans lequel les organes d'orientation de l'unité d'orientation et les organes d'appui du mécanisme combiné comprennent un organe (2, 3, 17) élastique sans fin, caractérisé en ce que l'organe élastique (17) du mécanisme combiné est un bande transporteuse et en ce qu'il se trouve vis à vis de la bande transporteuse (17) le mécanisme d'entraillage sous la forme d'une barre à lame (18) d'entaillage pivotable au-tour d'une arbre d'appui (25) disposé fixement lorsque l'extrémité libre reliée à l'un des leviers à deux bras (12) par une jonction d'une cheville et d'un rainure (24) occasionne l'action pivotante de ladite barre sour l'influence de la grandeur de l'oignon à être traité.

3. Dispositif selon la revendication 1 ou 2, caractérisé en ce que le mécanisme coupant comprend deux couteaux pivotants (30 et 31) ayant un axe de ratation du côté de l'un des organes (17) élastiques sans fin du mécanisme combiné et en ce que les guides (35, 36) sont disposés dans le trajet de l'oignon comme une addition aux couteaux pivotants.

4. Dispositif selon l'un quelconque des revendication 1—3, caractérisé en ce que la direction de rotation des couteaux pivotants (30 et 31) est opposée à la direction de giration des oignons qui leur est donnée par l'organe (17) élastique sans fin du mécanisme combiné.

5. Dispositif selon la revendication 2 ou 3, caractérisé en ce que la bande transporteuse (17) a une vélocité étant de 15 à 20% plus haute que la vélocité resultante des organes d'orientation (2, 3) de l'unité d'orientation.

6. Dispositif selon l'une quelconque des revendications 2—5, caractérisé en ce qu'au moins la barre à lame d'entaillage (18) est pouvue d'une lame (22) s'étendant dans le sens de la longueur du mécanisme et de lames d'entaillage (23) disposées dans des plans perpendiculaires sur la barre à lame d'entaillage avec un espacement régulier et ayant un côté coupant sensiblement creux.

7. Dispositif selon l'une quelconque des revendications 1—6, caractérisé en ce que l'organe (17) élastique sans fin du mécanisme combiné est chargé dans la direction de la barre à lame d'entaillage (18) par des rouleaux chargés d'un ressort (28, 29).

8. Dispositif selon l'une quelconque des revendications 2—7, caractérisé en ce que l'axe de l'arbre de support (25) de la barre à lame d'entaillage (18) se trouve dans un plan vertical qui est parallèle à l'axe longitudinal du dispositif et renferme l'axe de l'arbre (8) sur lequel se trouve l'un des leviers.

9. Dispositif selon la revendication 8, caractérisé en ce qu'il est prévue en outre une barre à lame fixe (19) qui se trouve dans le prolongement de la barre à lame d'entaillage (18).

## Patentansprüche

1. Eine Industrieschälmaschine für Zwiebeln (1) oder ähnliche zwiebelartige und knollenartige Gemüse, im Wesentlichen bestehend aus einer Orientierungseinheit in welcher die Zwiebeln durch relativ angrenzende Orientierungsmittel (2, 3) an beiden Seiten ihrer Bahn geführt werden, wobei die angrenzende Orientierungsmittel Oberteile aufweisen welche relativ so angetrieben werden das die Zwiebeln sich um eine Vertikalachse rotieren welche sich zwischen dem Schwanz (3) und der Wurzel (34) der Zwiebel erstreckt, aus einem kombinierten Mechanismus mit einem Scheidemechanismus (30, 31) zum Herabschneiden der Schwänze und Wurzeln der Zwiebeln und mit einem Einkerbemechanismus (22, 23) um Einkerbungen in die Aussenschalen der Zwiebeln zu machen, wobei auch der kombinierte Mechanismus. an beiden Seiten der Bahn der Zwiebeln mit Führungen versehen ist, welche mindestens an einer Seite ein angetriebenes endloses Federmittel (17) aufweist, welches Mittel die Zwiebeln an ihrer grössten Durchmesser senkrecht zur Rotierungsachse berührt, wobei im Gebiet wo die Zwiebeln durch die Führungen (17, 6—18) des kombinierten Mechanismus aufgenommen sind, die Oberteile der Orientierungsmittel (2, 3) der Orientierungseinheit sich abwärts in der Richtung der Vorwärtsbewegung der Zwiebeln erstrecken um einen Zusammenstoss mit dem Schneidemechanismus (30, 31) vorzubeugen, und aus einem Blasemechanismus (37) zur Entfernung der Aussenschalen der Zwiebeln, dadurch gekennzeichnet, dass im Gebiet wo die Zwiebeln zuerst durch die Führungen aufgenommen sind, das mindestens ein angetriebenes andloses Federmittel (17) in diesem Gebiet um eine Führungsrolle (16) geführt wird, und das in diesem Gebiet ein zweiar-miger Hebel (12, 13) einer an jeder Seite der Bahn der Zwiebeln, jeder gelenkig unterstütz, wie die oder jede Führungsrolle (16), an fest angeordnete Achsen (8, 9), an deren Mittellinien sich die Verbindungen der zweiarmigen Hebel (12, 13) befinden, wobei ein Arm (10) eines Hebels (12) mittels einer Nute-und-Stift-Verbindung (14, 15) an den korrespondierenden Arm (11) des anderen Hebels (13) befestigt ist, welcher in einer Spiegelreflektierten Weise an der anderen Seite der Bahn der Zwiebeln aufgestellt worden ist, und wobei jede der freien Ende der anderen Arme (6, 7) der genannten zweiarmigen Hebel (12, 13) auf die korrespondierende Führung (17, 6—18) arbeitet zur Anpassung der Entfernung zwischen den Führungen (17, 6—18) in Bezug auf die Abmessung der zu bearbeiteinden Zwiebel.

2. Eine Maschine nach Anspruch 1, wobei das Orientierungsmittel der Orientierungseinheit und die Führung des kombinierten Mechanismus ein endloses Federmittel (2, 3, 17) enthalten, dadurch gekennzeichnet, dass das Federmittel (17) des kombinierten Mechanismus ein Förderband ist, und dass dem Förderband (17) gegenüber der Einkerbemechanismus in Form einer Einkerbeblattstange (18) angeordnet ist, welcher drehbar um eine Fest angeordnete Stützachse (25) ist falls das freie Ende, welches mittels einer Stift-und-Nute-Verbindung (24) an einem der zweiarmigen Hebel (12) befestigt ist, dies unter dem Einfluss der Abmessung der zu bearbeitenden Zwiebel veranlässt.

3. Eine Maschine nach Anspruch 1 oder 2, dadurch gekennzeichnet, dass der Schneidemechanismus aus zwei rotierenden Messern (30, und 31) besteht, mit einer Drehungsmittellinie an der Seite einer der endlosen Federmittel (17) des kombinierten Mechanismus (17), und dass Führungen (35, 36) in die Bahn der Zwiebeln aufgestellt worden sind als eine Verländerung zu den rotierenden Messern.

4. Eine Maschine nach einem der Ansprüche 1—3, dadurch gekennzeichnet, dass die Drehungsrichtung der rotierenden Messer (30 und 31) gegensätzlich der Rotierungsrichtung der Zwiebeln ist, welche ihnen durch das endlose Federmittel (17) des kombinierten Mechanismus gegeben werden.

5. Eine Maschine nach Anspruch 2 oder 3, dadurch gekennzeichnet, dass das Förderband (17) eine 15 bis 20% grössere Geschwindigkeit hat als die ergebene Geschwindigkeit des Orientierungsmittels (2, 3) der Orientierungseinheit.

6. Eine Maschine nach einem der Ansprüche 2—5, dadurch gekennzeichnet, dass mindestens die Einkerbeblattstange (18) mit einem sich in Längsrichtung des Mechanismus erstreckenden Blatt (22) versehen ist und mit Einkerbeblättern (23) welche in senkrechten Ebenen an der Einkerbeblattstange in einer regelmässigen Entfernung mit einer hauptsächlich hohlen Schneideseite angeordnet worden sind.

7. Eine Maschine nach einem der Ansprüche 1—6, dadurch gekennzeichnet, dass das endlose Federmittel (17) des kombinierten Mechanismus in der Richtung der Einkerbeblattstange (18) mittels federbelasteter Rollen (28, 29) beaufschlagt wird.

8. Eine Maschine nach einem der Ansprüche 2—7, dadurch gekennzeichnet, dass die Mittellinie der Stützachse (25) der Einkerbeblattstange (18) sich in einer Vertikalebene befindet, welche parallel zur Längsachse der Maschine ist und welche die Mittellinie der Achse (8) an welcher einer der Hebel angeordnet worden ist, enthält.

9. Eine Maschine nach Anspruch 8, dadurch gekennzeichnet, dass weiter eine feste Blattstange (19), welche in der Verlängerung der Einkerbeblattstange (18) liegt, angeordnet ist.

FIG. 2

FIG. 3

FIG. 4

FIG. 1

0033180